# EUROPEAN PATENT APPLICATION

(11) **EP 4 155 261 A1**
(43) Date of publication of application: **29.03.2023**
(21) Application number: 21809040.5
(22) Date of filing: 21.05.2021
(51) Int. Cl.: C01B 11/04, B01D 61/02, B01D 61/14, B01D 71/16

(54) **SEPARATION APPARATUS AND SYSTEM FOR REMOVING IMPURITY IONS FROM AQUEOUS HYPOCHLOROUS ACID SOLUTION**

(30) Priority: 22.05.2020 JP 2020090046
(71) Applicant: Nipro Corporation, Osaka-shi, Osaka 531-8510 (JP); Health Support Sanri Corporation, Osaka-shi, Osaka 532-0011 (JP)
(72) Inventor: SANO, Yoshihiko, Osaka-shi, Osaka 531-8510 (JP); SHIOYAMA, Tadao, Osaka-shi, Osaka 532-0011 (JP); SUDO, Yoshinaga, Osaka-shi, Osaka 531-8510 (JP)
(74) Representative: M. Zardi & Co S.A.
(86) International application number: PCT/JP2021/019471
(87) International publication number: WO 2021/235554

(57) **Abstract**

The present invention relates to a separation device or system using a separation membrane, as a method of separating impurity ions other than hypochlorous acid from an aqueous solution containing hypochlorous acid as a main component, and provides a solution containing hypochlorous acid as a main component, having more excellent storage stability.

## Description

### TECHNICAL FIELD

The present disclosure relates to a separation device or system that can separate impurity ions other than hypochlorous acid from an aqueous solution containing hypochlorous acid as a main component to provide an aqueous solution containing hypochlorous acid as a main component having excellent storage stability.

### BACKGROUND ART

Conventionally, sodium hypochlorite, as one of chlorine-based halogen medicines, has exhibited a rapid bactericidal effect against bacteria at an extremely low concentration, and has been widely used in various fields such as public health for disinfection, sterile filtration, and the like in daily life, food, and medical care, as the most reliable disinfectant also in terms of its effect against viruses such as HIV and HBV. In particular, as the most familiar example, non-enveloped viruses such as viruses of the family Caliciviridae such as norovirus and SLV (sapovirus) and rotavirus cannot be expected to be sterilized by alcohol disinfection, and disinfection and sterile filtration with hypochlorous acids are first options. Specifically, an aqueous solution containing sodium hypochlorite has been used for disinfection and sterilization/sterile filtration of various items such as clothing, tableware, glass containers, and plastic containers as well as environments in homes and medical settings, in a form of a spray, and furthermore, powdered formulations have also been used for sterilization of water and sewage and pool. Moreover, sodium hypochlorite can also be used for hand disinfection in a form of an aqueous solution or wet wipes impregnated with an aqueous solution, at a very low concentration. However, an aqueous solution of sodium hypochlorite, in which a sodium hypochlorite salt is dissolved in water, is strongly alkaline, and its diluted solution is also alkaline, and therefore, when used for hand disinfection, it causes rough hands (Patent Document 1).

On the other hand, hypochlorous acid produced by electrolysis with sodium chloride, etc. is considered to have bactericidal and antiviral effects 80 times or more stronger than sodium hypochlorite, and such an aqueous hypochlorous acid solution exhibits acidity unlike an alkaline aqueous solution of sodium hypochlorite and easily causes corrosion of metal, etc. due to its low pH. Moreover, there is a problem that, under an acidic condition, an amount of chlorine ions increases, chlorine gas and hydrogen chloride gas are easily generated, and hypochlorous acid can decompose, resulting in fall below the indicated concentration in a short period of time. Furthermore, when hydrogen chloride dissolves in water, it becomes hydrochloric acid, and the aqueous solution exhibits acidity.

In contrast, Patent Document 2 discloses that a two-diaphragm three-chamber type electrolytic cell, in which an anode chamber, a cathode chamber, and an intermediate chamber containing a nonelectrolyte which is provided between the anode chamber and the cathode chamber are separated by diaphragms, respectively, is used to produce an aqueous hypochlorous acid solution containing substantially no impurity ions other than hypochlorous acid.

### PRIOR ART DOCUMENT

### Patent Document

Patent Document 1: JP 2011-229833 A
Patent Document 2: JP 2009-72755 A

### SUMMARY OF THE INVENTION

### PROBLEM TO BE SOLVED BY THE INVENTION

However, the method in Patent Document 2 has a problem that, when an attempt is made to increase the concentration of hypochlorous acid, the pH decreases, and the aqueous solution has a high total amount of chloride ions, resulting in decrease in concentration of hypochlorous acid during storage. Moreover, there is a problem that, when sodium hydroxide, sodium hydrogen carbonate, or the like is used for neutralization in order to reduce the amount of hydrogen chloride in the aqueous solution, undecomposed chlorides such as NaCl can increase.

Accordingly, it is an object of the present disclosure to provide an aqueous solution containing hypochlorous acid as a main component, having excellent storage stability.

### MEANS TO SOLVE THE PROBLEM

As a result of reviewing the above-described problems, the present inventors have found that, in an aqueous solution containing hypochlorous acid as a main component, impurity ions other than hypochlorous acid can be separated with a separation membrane, so that a more stable aqueous solution containing hypochlorous acid as a main component can be provided.

That is, the present disclosure relates to:
[1] A separation device or system using a separation membrane as a method of separating impurity ions other than hypochlorous acid from an aqueous solution containing hypochlorous acid as a main component,
[2] The separation device or system of [1] above, wherein an alkaline substance with a large molecular weight is added to the aqueous solution containing hypochlorous acid as a main component, to separate the ions with the separation membrane by:
   (i) making a chloride in the aqueous solution to have a higher molecular weight than hypochlorous acid; and/or
   (ii) increasing a size of a hydrate of an ion to be separated by neutralizing the aqueous solution,
[3] The separation device or system of [1] or [2] above, wherein a degree of separation is controlled by using a charged membrane and/or a separation membrane with a predetermined pore size as the separation membrane,
[4] The separation device or system of any one of [1] to [3] above, wherein an RO membrane, an NF membrane and/or a UF membrane is used as the separation membrane,
[5] The separation device or system of any one of [1] to [4] above, comprising at least one selected from a macromolecular polymer, ceramics, and metal, as a material of the separation membrane,
[6] The separation device or system of [5] above, wherein the macromolecular polymer is at least one selected from polysulfone, polyethersulfone, polypropylene, polyethylene, triacetate, diacetate, a nylon-based polymer, and PMMA (polymethyl methacrylate),
[7] The separation device or system of any one of [1] to [6] above, wherein the aqueous solution containing hypochlorous acid as a main component is produced by electrolysis or ion exchange,
[8] The separation device or system of any one of [1] to [7] above, wherein an electric field or a magnetic field is utilized as an aid in separating impurity ions other than hypochlorous acid from the aqueous solution containing hypochlorous acid as a main component,
[9] The separation device or system of any one of [3] to [6] above, wherein, in an aqueous hypochlorous acid solution produced by neutralizing sodium hypochlorite with acid, removing sodium by electrodialysis, or replacing Na ions with H ions by ion exchange, a resulting chloride is separated.

### EFFECTS OF THE INVENTION

According to the present disclosure, in the aqueous solution containing hypochlorous acid as a main component, by reducing impurity ions other than hypochlorous acid, an aqueous solution can be obtained which is less likely to be deactivated and has a more excellent storage stability, allowing for suppression of rust, etc. on metal generated when the aqueous solution containing hypochlorous acid as a main component is sprayed in space.

### EMBODIMENT FOR CARRYING OUT THE INVENTION

As used herein, "containing hypochlorous acid as a main component" means containing hypochlorous acid as a representative component other than water being a solvent, and it does not mean that hypochlorous acid accounts for the majority of components and that hypochlorous acid is the most abundant component among components other than water. On the other hand, in a conventional aqueous hypochlorous acid solution, contents of undecomposed sodium chloride and hydrochloric acid, which is a pH component, are large, and a proportion of hypochlorous acid is lower compared with, for example, the solution according to Embodiment 1 of the present disclosure which will be described later.

As used herein, "impurity ions other than hypochlorous acid" means ions contained other than hypochlorous acid. Specifically, examples of impurity ions other than hypochlorous acid include chloride ions, sodium ions, and the like, which are separated from the aqueous solution containing hypochlorous acid as a main component, either as unchanged or as other compounds.

According to Embodiment 1 of the present disclosure, provided is a separation device and system in which impurity ions other than hypochlorous acid in an aqueous solution are separated with a separation membrane, in the aqueous solution containing hypochlorous acid as a main component. By separating impurity ions other than hypochlorous acid in the aqueous solution, the pH of the aqueous solution can be made closer to neutral as possible, so that it is considered that an aqueous solution containing hypochlorous acid as a main component, having excellent storage stability, can be obtained. Moreover, there is less concern that the aqueous solution thus obtained may cause corrosion of metal and deterioration of resin.

In the aqueous solution containing hypochlorous acid as a main component according to Embodiment 1, with the separation of impurity ions other than hypochlorous acid in the aqueous solution with the separation membrane, the pH of the aqueous solution after the separation is preferably 4.0 or higher, more preferably 5.0 or higher, and particularly preferably 6.0 or higher. If the aqueous solution contains a large amount of impurity ions, particularly chloride ions, the pH of the aqueous solution becomes low, resulting in an acidic aqueous solution. If the aqueous solution is acidic, damage such as irritation and corrosion tends to increase.

As water used for preparing an aqueous solution containing hypochlorous acid as a main component, which is applied to the device or system according to Embodiment 1, pure water (e.g., RO water), purified water, ion-exchanged water, or the like is preferably used in order to suppress contamination of unplanned components such as, for example, metal ions and organic substances contained in tap water.

As a separation membrane used for separation treatment, for example, a back-filtration membrane (RO membrane, NF membrane), an ultrafiltration membrane (UF membrane), or the like can be used.

As the separation membrane, a hydrophobic membrane having a charged surface is preferably used. This is because that the use of the membrane having a charged membrane surface causes charging operation on the membrane, which makes it difficult for charged ionized substances in the aqueous solution to pass through the membrane, thereby increasing the separation efficiency. That is, the separation is achieved by utilizing a relationship between a charge state of a substance to be separated and a charge state of a membrane to be used. It is also possible to adjust a charge amount on a membrane surface by generating an electric field and a magnetic field to increase a proportion of a substance to be separated.

In addition, by using a separation membrane with a predetermined pore size, it is also possible to select a substance to pass through the membrane depending on a pore size of the separation membrane. The pore size of the separation membrane is, but not particularly limited to, preferably 50 nm or less, and more preferably 5 nm or less. Furthermore, it is preferable to use a membrane having a charged surface and a predetermined pore size as the separation membrane, thereby allowing for control of level of separation, i.e., degree of separation, selection of a substance to be separated, etc.

As a material constituting the separation membrane, known materials such as a macromolecular polymer, ceramics, and metal may be used alone or in combination thereof for the separation membrane.

Among materials constituting the separation membrane, as the macromolecular polymer, at least one selected from PSF (polysulfone), PES (polyethersulfone), PP (polypropylene), PE (polyethylene), CTA (triacetate), CDA (diacetate), PA (nylon-based polymer), and PMMA (polymethyl methacrylate) can be used.

The aqueous solution containing hypochlorous acid as a main component, which is applied to the separation device or system according to Embodiment 1, is preferably an electrolysis water, specifically, an electrolysis water containing hypochlorous acid as a main component, which is obtained by performing electrolysis that uses hydrochloric acid or sodium chloride and potassium chloride as raw materials.

The pH of the aqueous solution containing hypochlorous acid as a main component, which is obtained by the separation device or system according to Embodiment 1, is preferably 4.0 or higher, more preferably 5.0 or higher, further preferably 5.5 or higher, and particularly preferably 6.0 or higher. When the pH of the aqueous solution containing hypochlorous acid as a main component is 4.0 or more, corrosiveness is reduced, and the separation device or system tends to be able to be used for various applications. In particular, when the aqueous solution containing hypochlorous acid as a main component is used for a humidifier, an air cleaner, etc., there is a concern about corrosion and deterioration of parts used in the device, and therefore the pH is preferably 5.5 or higher. When the pH is 5.5 or higher, generation of chlorine gas (hydrogen chloride gas) can be further suppressed. In addition, it is preferable that the pH of the aqueous solution containing hypochlorous acid as a main component is 5.5 or more and 6.5 or less, which reduces irritation to a mucous membrane, etc. and at the same time meets standards for drinking water.

The aqueous solution containing hypochlorous acid as a main component, which is obtained by the separation device or system according to Embodiment 1, can be used for various applications due to its not too low pH and strong bactericidal and antiviral properties, for example, it can be widely used in various fields such as public health for disinfection, sterile filtration, and the like in daily life, food, and medical care. It can be appropriately used for disinfection and sterilization/sterile filtration of various items such as clothing, tableware, glass containers, and plastic containers and environments in homes and medical settings, particularly for cleaning and sterile filtration of skins such as hand and finger washing (sterile filtration by hand washing) and space sterile filtration. In particular, in an aspect where no salt is contained and pH is not too low, the aqueous solution has less concern about corrosion and contains hypochlorous acid having a high sterilization effect, so that it can maintain the hygiene of not only the device but also space, and therefore it is preferably used for a humidifier or an air cleaner instead of tap water in which fungi such as mold may be generated in a water storage tank and the generated fungi may be scattered.

The aqueous solution containing hypochlorous acid as a main component, which is applied to the separation device or system according to Embodiment 1, can be prepared by various methods. For example, at first, in the two-diaphragm three-chamber type electrolytic cell, electrolysis is performed using a sodium chloride aqueous solution as an electrolytic solution to obtain an acidic aqueous hypochlorous acid solution obtained in the anode chamber. At this time, in electrolysis with sodium chloride and water, generally, chloride ions and sodium ions migrate to the anode and the cathode, respectively, and the migrated chloride ions react with water to produce hydrochloric acid (HCl) and hypochlorous acid (HClO), generating oxygen gas. At the cathode, the sodium ions react with water to produce sodium hydroxide, generating hydrogen gas. For the reaction between sodium chloride and water, as shown in the following equation, a production ratio of hypochlorous acid to hydrochloric acid is stoichiometrically not more than 1:1, and therefore a production ratio of hypochlorous acid does not exceed that of hydrochloric acid:

2NaCl + H₂O -> 2NaOH + HCl + HClO

Next, the obtained acidic aqueous solution containing hypochlorous acid as a main component is passed through a separation membrane to separate hydrochloric acid from the aqueous solution, and the proportion of hypochlorous acid in the aqueous solution can be increased. By conducting such treatment to increase the ratio of hypochlorous acid to hydrochloric acid, the pH can be sloped toward the neutral side at the same time. This treatment can be repeated as many times as necessary to obtain a desired ratio of hypochlorous acid to hydrochloric acid and a desired pH.

According to Embodiment 2 of the present disclosure, a separation device or system is provided by adding an alkaline substance having a large molecular weight to an aqueous solution containing hypochlorous acid as a main component, and (i) making a molecular weight of a chloride in the aqueous solution higher than that of hypochlorous acid and/or (ii) neutralizing the aqueous solution, increasing a size of a hydrate of an ion (e.g., a sodium ion or a chloride ion) to be separated for separating it with a separation membrane. In this Embodiment 2, an alkaline substance having a large molecular weight is added to the solution containing hypochlorous acid as a main component to adjust the pH to, for example, 6.0 to 6.5, and the mixture is passed through a separation membrane to separate the chloride including NaCl. In this way, the purpose of performing the neutralization treatment before separation is to neutralize HCl contained in the aqueous solution containing hypochlorous acid as a main component with an alkaline substance including, for example, NaOH, turning it to NaCl having a larger molecular weight than that of HCl, to facilitate separation with the separation membrane. The pH after separation is set to 6.0 or more, which meets the standards for drinking water. In Embodiment 2, it is more preferable to set the pH of the aqueous solution containing hypochlorous acid as a main component after separation to 6.0 to 6.8. Here, as the alkaline substance having a large molecular weight, a variety of pH adjusting agents can be used, specifically an aqueous solution of sodium hydroxide, potassium hydroxide, calcium hydroxide, sodium bicarbonate, potassium bicarbonate, calcium bicarbonate, magnesium bicarbonate, sodium acetate, potassium acetate, calcium acetate, magnesium acetate, sodium citrate, potassium citrate, calcium citrate, or magnesium citrate. Among them, an aqueous solution of sodium hydroxide is particularly preferable.

The aqueous solution obtained by the device or system according to Embodiment 2 has a pH of 5.0 to 7.0, which is neutral to weakly acidic, so that the pH becomes close to a pH of a skin, greatly reducing occurrence of irritation due to acid and of itching due to alkali. Moreover, generation of trihalomethanes can be suppressed by not tilting the pH toward the alkali side. When the aqueous solution is sprayed indoors, low concentration of hydrogen chloride (HCl) and low salts concentration make it possible to suppress corrosion, particularly influence on an electronic substrate, or the like. In addition to the application of the aqueous solution according to Embodiment 1, the aqueous solution can be further used for various applications, for example, it can be appropriately used in particular for cleaning and sterile filtration of skins such as hand and finger washing (sterile filtration by hand washing), space sterile filtration, sterile filtration of instruments, etc., sterile filtration of pressure ulcer, and the like.

The aqueous solution containing hypochlorous acid as a main component, which is obtained by the separation device or system according to Embodiments 1 and 2 of the present disclosure, can be used for cleaning or disinfecting and sterilizing wounds that come into contact with blood, such as wounds caused by surgical or non-surgical means, or it can be introduced into a lung by a nebulizer and used for sterilizing the lung. Specifically, it can be used for surgery such as a general surgery, an endoscopic surgery, a robot-assisted laparoscopic surgery, an oral surgery, a graft surgery, an implant surgery, and a transplant surgery, cauterization, amputation, radiation, chemotherapy, burn, cut, abrasion, scratch, rash, ulcer, puncture wound, pressure ulcer, and combinations thereof, etc., preferably for applications such as infection control and keloid countermeasures.

Besides, in the present specification, the matters described in each of Embodiments 1 and 2 shall also be applied to each other for other embodiments as long as there is no contradiction.

Moreover, the separation device or system according to Embodiments 1 and 2 can perform separation treatment to remove chlorides produced even if an aqueous hypochlorous acid solution is produced by a method other than electrolysis as described above, and can increase their relative concentrations of hypochlorous acid. For example, an aqueous hypochlorous acid solution can be produced by a method of such as adding an acid to sodium hypochlorite for neutralization, removing sodium by electrodialysis of sodium hypochlorite, and replacing Na ions with H ions by ion exchange, and then chlorides produced therein can be separated with a separation membrane.

Although the present disclosure will be specifically described below based on Examples, it is not intended to be limited to these Examples. Besides, the aqueous solution containing hypochlorous acid as a main component, which is obtained in the present disclosure, can be freeze-preserved.

### EXAMPLE

### Example 1

An aqueous solution of sodium chloride was electrolyzed as an electrolytic solution in a 2-diaphragm 3-chamber type electrolytic cell to obtain a strongly acidic aqueous hypochlorous acid solution from the anode side. The obtained strongly acidic aqueous hypochlorous acid solution was passed through an RO membrane (polyamide RO membrane manufactured by Mitsubishi Chemical Aqua Solutions Co., Ltd.) to remove hydrochloric acid from the aqueous solution, obtaining an aqueous solution containing hypochlorous acid as a main component in which a proportion of hypochlorous acid in the aqueous solution is increased. A concentration of hypochlorous acid in the obtained aqueous solution containing hypochlorous acid as a main component was measured using an absorptiometer (AQ-102, manufactured by SIBATA SCIENTIFIC TECHNOLOGY LTD.). Besides, pH was measured with a multiple water quality meter (MM-60, manufactured by Toa DKK-TOA CORPORATION).

### Comparative example 1

An aqueous solution containing hypochlorous acid as a main component was obtained in the same manner as in Example 1, except that no separation treatment with the separation membrane (RO membrane) was performed. A concentration of hypochlorous acid and other physical properties of the obtained aqueous solution containing hypochlorous acid as a main component were obtained in the same manner as in Example 1. The results are shown in Table 1.

**Table 1**

| | Example 1 | | Comparative example 1 |
|---|---|---|---|
| | Before separation | After separation | |
| HClO concentration (mg/L) | 40 | 39 | 44 |
| Conductivity (µS/cm) | 98.5 | 6.1 | 336 |
| pH | 6.00 | 6.57 | 3.12 |

From Table 1, it can be found that, after membrane separation in Example 1, the pH is increased and the conductivity is decreased as compared with Comparative example 1, so that the relative concentration of hypochlorous acid is increased, allowing for an aqueous solution containing hypochlorous acid as a main component, which is excellent in storage stability, to be obtained.

### Example 2, Comparative example 2

As in Example 1 and Comparative example 1, sodium hydroxide was added to an aqueous solution containing hypochlorous acid as a main component, which was obtained by electrolysis, to adjust the pH to around 5.5. In Example 2, the obtained aqueous solution was subjected to separation treatment with an RO membrane (cellulose membrane manufactured by TOYOBO CO., LTD.) in the same manner as in Example 1 (no separation treatment was performed in Comparative example 2). Measurements in Example 2 and Comparative example 2 were performed in the same manner as in Example 1 and Comparative example 1. The results are shown in Table 2.

**Table 2**

| | Example 2 | | Comparative example 2 |
|---|---|---|---|
| | Before separation | After separation | |
| HClO concentration (mg/L) | 22 | 22 | 23 |
| Conductivity (µS/cm) | 119 | 4.33 | 846 |
| pH | 5.49 | 6.25 | 5.62 |

From Table 2, it can be found that, in Example 2, an increase in pH and a decrease in conductivity were confirmed as compared with Comparative example 2, and therefore, the relative concentration of hypochlorous acid is increased, allowing for an aqueous solution containing hypochlorous acid as a main component, which has a good stability and suppresses the corrosive action against metal, etc., to be obtained.

## Claims

1. A separation device or system using a separation membrane as a method of separating impurity ions other than hypochlorous acid from an aqueous solution containing hypochlorous acid as a main component.

2. The separation device or system of claim 1, wherein an alkaline substance with a large molecular weight is added to the aqueous solution containing hypochlorous acid as a main component, to separate the ions with the separation membrane by:
(i) making a chloride in the aqueous solution to have a higher molecular weight than hypochlorous acid; and/or
(ii) increasing a size of a hydrate of an ion to be separated by neutralizing the aqueous solution.

3. The separation device or system of claim 1 or 2, wherein a degree of separation is controlled by using a charged membrane and/or a separation membrane with a predetermined pore size as the separation membrane.

4. The separation device or system of any one of claims 1 to 3, wherein an RO membrane, an NF membrane and/or a UF membrane is used as the separation membrane.

5. The separation device or system of any one of claims 1 to 4, comprising at least one selected from a macromolecular polymer, ceramics, and metal, as a material of the separation membrane.

6. The separation device or system of claim 5, wherein the macromolecular polymer is at least one selected from polysulfone, polyethersulfone, polypropylene, polyethylene, triacetate, diacetate, a nylon-based polymer, and PMMA (polymethyl methacrylate).

7. The separation device or system of any one of claims 1 to 6, wherein the aqueous solution containing hypochlorous acid as a main component is produced by electrolysis or ion exchange.

8. The separation device or system of any one of claims 1 to 7, wherein an electric field or a magnetic field is utilized as an aid in separating impurity ions other than hypochlorous acid from the aqueous solution containing hypochlorous acid as a main component.

9. The separation device or system of any one of claims 3 to 6, wherein, in an aqueous hypochlorous acid solution produced by neutralizing sodium hypochlorite with acid, removing sodium by electrodialysis, or replacing Na ions with H ions by ion exchange, a chloride produced is separated.
